# EUROPÄISCHE PATENTSCHRIFT

(11) **EP 1 381 899 B1**
(45) Veröffentlichungstag und Bekanntmachung des Hinweises auf die Patenterteilung: **08.06.2005**
(21) Anmeldenummer: 02732668.5
(22) Anmeldetag: 25.04.2002
(51) Int. Cl.: G02B 7/04

(54) **GROB- UND FEINTRIEB MIT RIEMENANTRIEB FÜR EIN MONOKULAR, INSBESONDERE FÜR EIN FERNROHR**
ROUGH AND FINE DRIVE FOR A MONOCULAR, ESPECIALLY FOR A TELESCOPE
MECANISMES DE REGLAGE GROSSIER ET FIN CON US POUR UN SYSTEME MONOCULAIRE, EN PARTICULIER POUR UN TELESCOPE

(30) Priorität: 27.04.2001 DE 10121074
(43) Veröffentlichungstag der Anmeldung: 21.01.2004
(73) Patentinhaber: Hensoldt AG, 35573 Wetzlar (DE)
(72) Erfinder: LUTHARDT, Dirk, 35581 Wetzlar (DE); JAVORSKY, Myron, 751 24 Prerov (CZ)
(74) Vertreter: Gnatzig, Klaus
(86) Internationale Anmeldenummer: PCT/EP2002/004570
(87) Internationale Veröffentlichungsnummer: WO 2002/088820

(56) Entgegenhaltungen:
- DE-A- 3 430 750
- DE-A- 3 531 832
- US-A- 5 276 554
- US-A- 5 293 268
- US-A- 5 999 312
- US-A- 6 130 715

## Beschreibung

Die Erfindung betrifft eine Fokussieroptik die mittels eines Grobtriebes und mittels eines Feintriebes in einem Gehäuse entlang der optischen Achse axial verschiebbar ist. Die Erfindung betrifft weiterhin ein Monokular, insbesondere zur Bereitstellung von großen Vergrößerungen im Bereich von 20fach bis 60fach. Das Monokular weist eine mittels eines Grobtriebes und eines Feintriebes einstellbare Fokussieroptik auf.

Aus der DE 42 31 655 C1 ist ein monokulares Fernrohr bekannt, das ein Stellglied, aufweist. Dieses Stellglied ist eine drehbar gelagerte Welle, die senkrecht zur optischen Achse angeordnet ist und beidseitig mit einem Drehknopf fest verbunden ist. Weiterhin ist dieses Stellglied senkrecht zur optischen Achse verschiebbar. Durch Verschieben des Stellgliedes senkrecht zur optischen Achse können drei Rastpositionen eingestellt werden, wobei jeder Rastposition eine Übersetzungsstufe zugeordnet ist. Durch die jeweils ausgewählte Übersetzungsstufe steht eine Fokussieroptik mit dem Stellglied in Wirkverbindung, wobei die Geschwindigkeit der Stellbewegung der Fokussieroptik von der gewählten Übersetzungsstufe abhängt.

Aus dem Firmenprospekt der Firma Leica von 1998 mit der Bestellnummer der Ausgabe 910596 ist ein Spektiv bzw. ein monokulares Fernrohr bekannt, das zur Einstellung der Fokussierung einen Grobtrieb und einen Feintrieb zur Fokussierung auf Entfernungen zwischen 3,95 m und ∞ aufweist. Das Betätigungselement des Grobtriebs ist direkt mit einer Abtriebswelle verbunden, wobei das Betätigungselement des Feintriebs über ein Schleppgetriebe mit der Abtriebswelle in Wirkverbindung steht. Die Drehbewegung der Abtriebswelle wird mittels eines Zahnriemens auf eine Spindel übertragen, wobei eine entlang der optischen Achse verschiebbare Fokussieroptik durch Drehung der Spindel entlang der optischen Achse verschoben wird.

Nachteilig ist bei dieser Mechanik, daß Schleppgetriebe oftmals nicht exakt arbeiten und daß sich im Laufe der Jahre die Übersetzung des Schleppgetriebes verändert.

Der Erfindung liegt die Aufgabe zugrunde einen Grob- und Feintrieb für eine Fokussieroptik zu entwickeln, der während der gesamten Lebensdauer zuverlässig arbeitet, wobei einerseits eine sehr feinfühlige Einstellung mittels des Feintriebs möglich ist und andererseits eine schnelle Eingestellung mittels des Grobtriebs möglich ist.

Die Aufgabe der Erfindung wird durch die im Patentanspruch 1 gegebenen Merkmale gelöst. Durch die Maßnahme, daß der Grobtrieb einen ersten Riementrieb umfaßt, mittels dessen der Grobtrieb und die Fokussieroptik in Wirkverbindung stehen und daß ein zweiter Riementrieb zur Verbindung von Feintrieb und Fokussieroptik vorgesehen ist, wird eine exakte Übertragung der über den Feintrieb oder den Grobtrieb eingeleiteten Bewegung auf die Fokussieroptik gewährleistet.

Es hat sich als vorteilhaft herausgestellt, solch eine Fokussieroptik in einem Monokular bzw. in einem monokularen Fernglas einzusetzen, so daß mittels des Grobtriebes der gesamte Fokussierbereich schnell abgefahren werden kann und in jedem Abschnitt des Fokussierbereichs auf ein potentielles Objekt sehr feinfühlig mittels des Feintriebs fokussiert werden kann. Weiterhin ist solch ein Fokussierantrieb bei Mikroskopen einsetztbar.

Es hat sich als vorteilhaft herausgestellt, das Betätigungselement, vorzugsweise ein Drehknopf, des Grobtriebs beabstandet zum Betätigungselement, vorzugsweise ein Drehelement, des Feintriebs anzuordnen. Dadurch wird gewährleistet, daß der Benutzer des optischen Gerätes, wie zum Beispiel ein monokulares Fernrohr, nicht versehentlich bei einer Betätigung des Feintriebs versehentlich auch den Grobtrieb betätigt. Insbesondere wird ein versehentliches verrutschen, insbesondere vom Feintrieb auf den Grobtrieb, verhindert. Damit wird ein ungewolltes defokussieren, bei dem ein bereits grob anfokussiertes Objekt aus dem Blickfeld verschwindet und sehr mühsam wieder gesucht bzw. aufs neue anfokussiert werden muß, verhindert.

In einem bevorzugten Ausführungsbeispiel ist mit dem Betätigungselement des Grobtriebs eine Abtriebswelle fest verbunden, die ihrerseits eine Umlenkrolle trägt. Diese Umlenkrolle ist bereits Teil des ersten Riementriebs. Dieser erste Riementrieb umfaßt eine weitere Umlenkrolle, so daß der Riemen des ersten Riementriebs durch mindestens zwei Umlenkrollen geführt wird.

Es hat sich als vorteilhaft herausgestellt, eine Spannrolle vorzusehen, durch die eine vorbestimmte Vorspannung des Riemens über die Lebensdauer der Fokussiereinrichtung bereitgestellt werden kann.

Es hat sich als vorteilhaft herausgestellt, als Riemen Zahnriemen zu verwenden und die Umlenkrollen mit einer Außenverzahnung zu versehen, so daß die Zähne der Zahnriemen jeweils in die Außenverzahnung der Umlenkrollen eingreifen. Durch Verwendung eines Zahnriemens ist eine exakte Übertragung der Bewegung von der jeweiligen Abtriebswelle auf die Fokussieroptik gewährleistbar. Es ist jedoch auch möglich Riemen mit einer glatten Oberfläche zu verwenden, die mit der Oberfläche der Umlenkrollen derart in Kontakt stehen, daß ein Durchrutschen der Riemen auf der jeweiligen Umlenkrolle aufgrund der Spannung des Riemens oder der Haftreibung zwischen Riemen und Umlenkrolle verhindert ist.

In einem bevorzugten Ausführungsbeispiel sind die Riementriebe von Grob- und Feintrieb nebeneinander auf entgegengesetzten Enden der Abtriebswellen angeordnet.

In einer Ausführungsvariante ist vorgesehen, daß das Betätigungselement des Grobtriebs und das Betätigungselement des Feintriebs koaxial zu einer gemeinsamen Mittenachse angeordnet sind. Dies wirkt sich vorteilhaft auf die Benutzung des monokularen Femglases aus, denn der Benutzer kann durch Bewegung des für die Betätigung vorgesehenen Fingers entlang dieser Achse komfortabel von Grobtrieb auf Feintrieb und umgekehrt wechseln. Es kann aber auch vorgesehen sein, die Betätigungselemente von Grob- und Feintrieb auf zwei Achsen, die koaxial versetzt angeordnet sind, anzuordnen.

In einem bevorzugten Ausführungsbeispiel ist vorgesehen, daß die Abtriebswellen von Grob- und Feintrieb koaxial zueinander angeordnet sind. Vorzugsweise ist die Abtriebswelle des Grobtriebs koaxial zur Abtriebswelle des Feintriebs angeordnet.

Als geeignete Abstimmung zwischen Grob- und Feintrieb hat es sich als vorteilhaft herausgestellt, wenn bei gleicher Winkelbewegung von Grob- und Feintrieb bei Betätigung des Grobtriebes die Fokussieroptik einen um den Faktor drei größeren Weg zurücklegt.

Anhand der folgenden Ausführungsbeispiele wird die Erfindung im folgenden näher beschrieben. Es zeigt:
- Figur 1:: Monokulares Fernrohr; Gesamtüberblick;
- Figur 2:: Ausschnittszeichnung eines monokularen Fernrohres mit beabstandet angeordneten Betätigungselementen; und
- Figur 3:: Benachbart angeordnete Betätigungselemente für die Betätigung einer Fokussieroptik

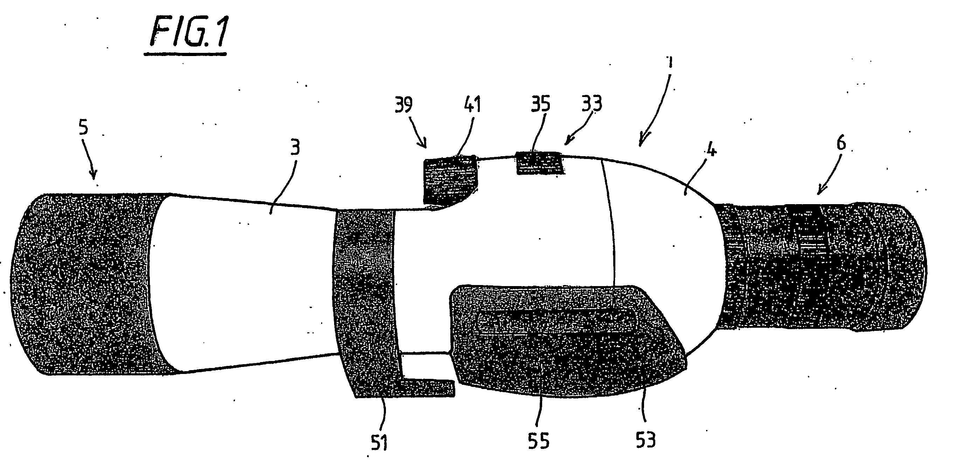

Anhand von Figur 1 wird zunächst der prinzipielle Aufbau eines monokularen Fernrohres 1 prinzipiell beschrieben. Das monokulare Fernrohr 1 weist ein Objektiv 5 und ein Okular 6 auf. Dieses monokulare Fernrohr 1 weist ein objektseitiges Gehäuseteil 3 und ein okularseitiges Gehäuseteil 4 auf. Das objektseitige Gehäuseteil ist mit einer Stativbefestigung 51 versehen. Weiterhin weist das monokulare Fernrohr 1 einen Griffbereich 53 auf, in dem Griffmulden 55 auf beiden Längsseiten des monokularen Fernrohres 1 ausgebildet sind. Dieser Griffbereich 53 ist auf der Unterseite des monokularen Fernrohrs 1 angeordnet. Auf der dem Griffbereich 53 gegenüberliegenden Seite sind Betätigungselemente 41, 35 angeordnet, die für die Betätigung der Fokussieroptik 7 vorgesehen sind.

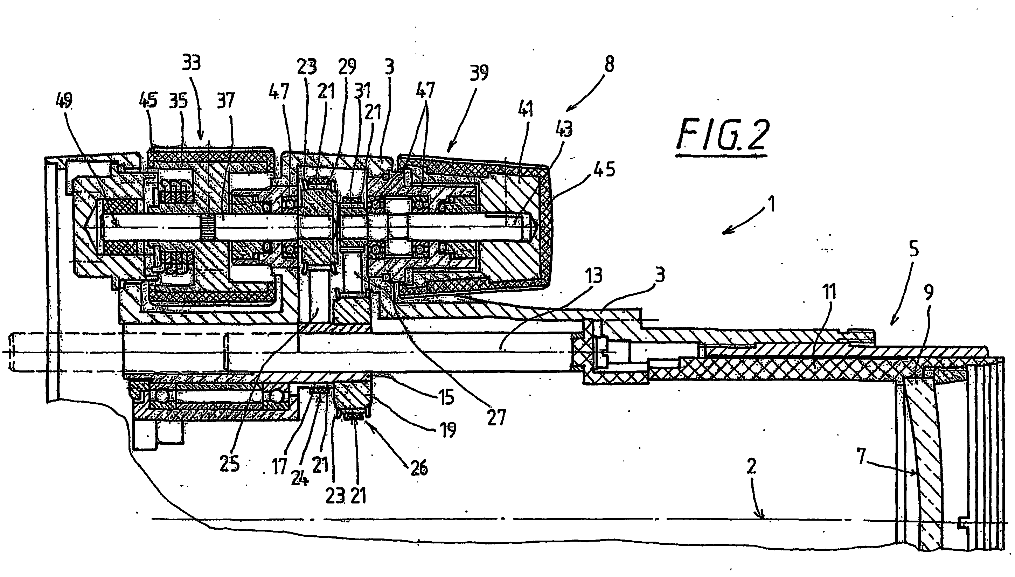

Anhand von Figur 2 wird eine Fokussieroptik 7 mit der Betätigungsmechanik 8, durch die die Fokussieroptik entlang der optischen Achse verschiebbar ist, näher beschrieben.

In Figur 2 ist ein Ausschnitt durch das objektseitig bzw. objektivseitig angeordnete Gehäuseteil 3 dargestellt. In diesem Bereich ist die Fokussieroptik 7, die in diesem Ausführungsbeispiel eine Fokussierlinse 9 umfaßt, angeordnet. Diese Fokussierlinse ist einer Fassung 11 gelagert, die fest mit einer Gewindespindel 13 verbunden ist. Diese Gewindespindel 13 steht in Verbindung mit einer Mutter 15, die bei Fixierung bezüglich der axialen Richtung drehbar gelagert ist. Auf der Mutter 15 sind zwei Umlenkrollen 17, 19 gelagert, wobei diese Umlenkrollen 17, 19 drehfest mit der Mutter verbunden sind.

Die Umlenkrolle 17 weist im Vergleich zur Umlenkrolle 19 einen wesentlichen kleineren Durchmesser und damit Umfang auf. Diese Umlenkrolle 17 ist Teil eines ersten Riementriebs 24 der eine weitere Umlenkrolle 29 aufweist, die drehfest mit einer Abtriebswelle 37 des Grobtriebs 33 verbunden ist. Diese Abtriebswelle 37 ist über Lager 47 drehbar gelagert. Mit dieser Abtriebswelle 37 ist das Betätigungselement 35 des Grobtriebs 33, das als Drehknopf ausgebildet ist, drehfest verbunden. Dieser Drehknopf ist mit einem Überzug 45, durch den eine gute Griffigkeit des Drehknopfes 35 bereitgestellt wird, überzogen.

Die Umlenkrolle 17 steht über den Zahnriemen 25 mit der Umlenkrolle 29, die mit Seitenführungen 23 versehen ist, in Wirkverbindung. Durch diese beiden Umlenkrollen 17, 29 mit dem Zahnriemen 25 wird der erste Riementrieb 24 bereitgestellt.

In axialer Fortsetzung zur Abtriebswelle 27 ist eine weitere Abtriebswelle 43 angeordnet, die drehbar gelagert ist und mit dem Betätigungselement 41 des Feintriebes 39 fest verbunden ist. Auch das Betätigungselement 41, das ebenfalls als Drehknopf ausgebildet ist, ist auch mit einem Überzug 45 für die Bereitstellung einer guten Griffigkeit, versehen. Diese Abtriebswelle 43 des Feintriebs 39 ist ebenfalls mit einer Umlenkrolle 31 fest verbunden. Diese Umlenkrolle 31 steht über einen Zahnriemen 27 mit der Umlenkrolle 19 in Wirkverbindung. Im Vergleich zur Umlenkrolle 29 weist die Umlenkrolle 31 einen wesentlich kleineren Durchmesser auf, durch die Umlenkrollen 31,19 und dem Riemen 27 wird der zweite Riementrieb gebildet.

Durch die Wahl der Durchmesser der Umlenkrollen 17, 19, 29, 31 bzw. das Verhältnis des Durchmessers der Umlenkrolle 29 zu dem Durchmesser der Umlenkrolle 17 und dem Verhältnis des Durchmessers der Umlenkrolle 31 zu dem Durchmesser der Umlenkrolle 19 wird das Übersetzungsverhältnis von Feintrieb 39 und Grobtrieb 33 und somit der Übersetzungsverhältnisse von Fein- und Grobtrieb zueinander festgelegt.

Durch Betätigung des Drehknopfes 41 wird die Fokussierlinse 9 entlang der optischen Achse 2 bewegt. Aufgrund der Übersetzung des zweiten Riementriebs 26, der dem Feintrieb zugeordnet ist, ist eine feinfühlige Positionierung der Fokussierlinse möglich. Durch Drehbewegung des Drehknopfes 35, der dem Grobtrieb 33 zugeordnet ist, ist die Fokussierlinse 9 mit hoher Geschwindigkeit entlang der optischen Achse aufgrund des Übersetzungsverhältnisses des ersten Riementriebes 24 bewegbar. Mit Drehung der Mutter 15 führt die Spindel 13; die mit der Fassung 11 der Fokussieroptik 7 fest verbunden ist, eine Bewegung parallel zur optischen Achse aus.

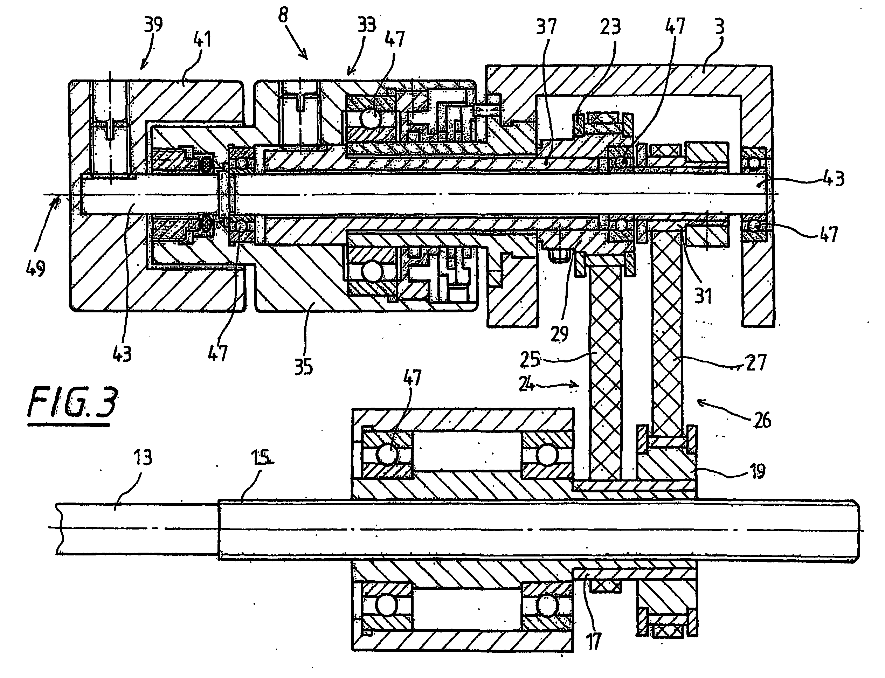

In Figur 3 ist eine Ausführungsvariante dargestellt, bei der das Betätigungselement 41 des Feintriebs 39 und das Betätigungselement 35 des Grobtriebs 33 koaxial zu einer Mittenachse 49 angeordnet sind. Die Abtriebswelle 37 des Grobtriebs 33 ist koaxial zur Abtriebswelle 43 des Feintriebs angeordnet Endseitig ist die Abtriebswelle 37 des Grobtriebs mit einer Umlenkrolle 29, die Seitenführungen 23 aufweist, drehfest verbunden und die Abtriebswelle 43 des Feintriebs ist mit der Umlenkrolle 31 fest verbunden. Endseitig ist die Abtriebswelle 43 drehbar im Gehäuse 3 gelagert. Zur Lagerung der Abtriebswelle 43 und der Abtriebswelle 37 sind Lager 47 vorgesehen. Die Umlenkrolle 29 steht über den Zahnriemen 25 mit der Umlenkrolle 17 in Wirkverbindung. Zur Bereitstellung einer vorbestimmten Vorspannung des Zahnriemens kann eine Spannrolle, hier nicht dargestellt, vorgesehen sein. Die Umlenkrolle 31 steht über den Zahnriemen 27 mit der Umlenkrolle 19 in Wirkverbindung. Die Umlenkrollen 17, 19 sind drehfest mit der Mutter 15, die drehbar mittels der Lager 47 gelagert ist, und die in axialer Richtung nicht verschiebbar gelagert ist, fest verbunden. Wird die Mutter 15 in Rotation versetzt, so führt die mit der Mutter in Bingriff befindliche Spindel 13 eine Bewegung in Richtung der optischen Achse aus. Diese Spindel 13 ist der Fokussieroptik 13, hier mit der Fassung 11, in der die Fokussierlinse 9 gelagert ist, fest verbunden.

### Bezugszeichenliste

- 1: Monokulares Fernrohr
- 2: Optische Achse
- 3: Gehäuseteil
- 4: Gehäuseteil
- 5: Objektiv
- Stativbefestigung
- 6: Okular
- 7: Fokussieroptik
- 8: Betätigungsmechanik
- 9: Fokussierlinse
- 11: Fassung
- 13: Gewindespindel
- 15: Mutter
- 17: Umlenkrolle
- 19: Umlenkrolle
- 21: Außenverzahnung
- 23: Seitenführung
- 24: 1. Riementrieb
- 25: Riemen
- 26: 2. Riementrieb
- 27: Riemen
- 29: Umlenkrolle
- 31: Umlenkrolle
- 33: Grobtrieb
- 35: Drehknopf/Betätigungselement
- 37: Abtriebswelle
- 39: Feintrieb
- 41: Drehknopf/Betätigungslement
- 43: Abtriebswelle
- 49: Mittenachse
- 51: Stativbefestigung
- 53: Griffbereich
- 55: Griffmulden
- 45: Überzug
- 47: Lager

## Patentansprüche

1. Fokussieroptik, die mittels eines Grobtriebes und mittels eines Feintriebes über bewindespindel (13) und Mutter (15) axial entlang einer optischen Achse verschiebbar gelagert ist, **dadurch gekennzeichnet, dass** der Grobtrieb (33) einen ersten Riementrieb (24) umfasst, mittels dessen der Grobtrieb (33) und die Fokussieroptik (7) über Gewindespindel (13) und Mutter (15) in Wirkverbindung stehen und dass ein zweiter Riementrieb (26) zur Verbindung von Feintrieb (39) und Fokussieroptik über selbige Gewindespindel (13) und Mutter (15) vorgesehen ist.

2. Monokular, insbesondere Fernrohr, mit einer entlang der optischen Achse (2) axial verschiebbaren Fokussieroptik (7) gemäß Anspruch 1.

3. Fokussieroptik nach Anspruch 1 oder 2, **dadurch gekennzeichnet, dass** der erste Riementrieb jeweils für die Grobfokussierung und der zweite Riementrieb jeweils für die Feinfokussierung vorgesehen ist.

4. Fokussieroptik nach Anspruch 1 oder Anspruch 2, **dadurch gekennzeichnet, dass** der Grobtrieb (33) ein Betätigungselement (35) umfasst, das beabstandet zu einem Betätigungselement (41) des Feintriebs (39) angeordnet ist.

5. Fokussieroptik nach Anspruch 1 oder Anspruch 2, **dadurch gekennzeichnet, dass** das Betätigungselement (35) des Grobtriebs (33) mit einer Abtriebswelle (37) fest verbunden ist, die mit einer Umlenkrolle (29) des ersten Riementriebes (24) fest verbunden ist.

6. Fokussieroptik nach Anspruch 1 oder Anspruch 2, **dadurch gekennzeichnet, dass** das Betätigungselement (41) des Feintriebs mit einer Abtriebswelle (43) fest verbunden ist, die mit einer Umlenkrolle (31) des zweiten Riementriebs (26) fest verbunden ist.

7. Fokussieroptik nach Anspruch 1 oder Anspruch 2, **dadurch gekennzeichnet, dass** die Riementriebe (24, 26) an zueinander gewandten Enden der Abtriebswellen (37, 43) nebeneinander angeordnet sind.

8. Fokussieroptik nach Anspruch 1 oder Anspruch 2, **dadurch gekennzeichnet, dass** das Betätigungselement (35) des Grobtriebs (33) und das Betätigungselement (41) des Feintriebs (39) koaxial zu einer gemeinsamen Mittenachse (49) angeordnet sind.

9. Fokussieroptik nach Anspruch 8, **dadurch gekennzeichnet, dass** die Betätigungselemente (35, 41) entlang der Mittenachse (49) hintereinander in bezug auf die optische Achse (2) der Fokussieroptik (7) angeordnet sind.

10. Fokussieroptik nach Anspruch 1 oder Anspruch 2, **dadurch gekennzeichnet, dass** die Riementriebe (24, 26) jeweils einen Zahnriemen (25, 27) umfassen und die Umlenkrollen (17, 19, 29, 31) mit einer Außenverzahnung (21) ausgebildet sind, in die die Verzahnung der Zahnriemen (25, 27) eingreifen.

11. Fokussierantrieb nach Anspruch 1 oder Anspruch 2, **dadurch gekennzeichnet, dass** die Riementriebe (24, 26) mit einer Spannrolle versehen sind, durch die eine vorbestimmte Spannung der Riemen (25, 27) der Riementriebe (24, 26) gewährleistet werden kann.

12. Fokussierantrieb nach mindestens nach Anspruch 1 oder Anspruch 2, **dadurch gekennzeichnet, dass** der Feintrieb (39) eine dreimal so exakte Positionierung im Vergleich zum Grobtrieb (33) erlaubt.

## Claims

1. Focussing optics which is mounted such that it can be displaced axially along an optical axis by means of a coarse drive and by means of a fine drive via a threaded spindle (13) and nut (15), **characterized in that** the coarse drive (33) comprises a first belt drive (24) by means of which the coarse drive (33) and the focussing optics (7) are operationally connected via the threaded spindle (13) and nut (15), and **in that** a second belt drive (26) is provided for connecting the fine drive (39) and focussing optics via the same threaded spindle (13) and nut (15).

2. Monocular, in particular a telescope, having a focussing optics (7) that can be displaced axially along the optical axis (2), in accordance with Claim 1.

3. Focussing optics according to Claim 1 or 2, **characterized in that** the first belt drive is respectively provided for coarse focussing, and the second belt drive is respectively provided for fine focussing.

4. Focussing optics according to Claim 1 or Claim 2, **characterized in that** the coarse drive (33) comprises an actuating element (35) which is arranged at a spacing from an actuating element (41) of the fine drive (39).

5. Focussing optics according to Claim 1 or Claim 2, **characterized in that** the actuating element (35) of the coarse drive (33) is permanently connected to an output shaft (37) which is permanently connected to a deflecting roller (29) of the first belt drive (24).

6. Focussing optics according to Claim 1 or Claim 2, **characterized in that** the actuating element (41) of the fine drive is permanently connected to an output shaft (43) which is permanently connected to a deflecting roller (31) of the second belt drive (26).

7. Focussing optics according to Claim 1 or Claim 2, **characterized in that** the belt drives (24, 26) are arranged next to one another on mutually facing ends of the output shafts (37, 43).

8. Focussing optics according to Claim 1 or Claim 2, **characterized in that** the actuating element (35) of the coarse drive (33) and the actuating element (41) of the fine drive (39) are arranged coaxially with a common central axis (49).

9. Focussing optics according to Claim 8, **characterized in that** the actuating elements (35, 41) are arranged one behind another along the central axis (49) with reference to the optical axis (2) of the focussing optics (7).

10. Focussing optics according to Claim 1 or Claim 2, **characterized in that** the belt drives (24, 26) each comprise a toothed belt (25, 27), and the deflecting rollers (17, 19, 29, 31) are constructed with external teeth (21) in which the teeth of the toothed belt (25, 27) engage.

11. Focussing drive according to Claim 1 or Claim 2, **characterized in that** the belt drives (24, 26) are provided with a tension roller which can ensure a predetermined tension of the belts (25, 27) of the belt drives (24, 26).

12. Focussing drive according to at least one of Claim 1 or Claim 2, **characterized in that** by comparison with the coarse drive (33), the fine drive (39) permits positioning which is three times as exact.

## Revendications

1. Optique de focalisation, qui est montée de manière à pouvoir coulisser axialement le long d'un axe optique au moyen d'un mécanisme de réglage grossier et d'un mécanisme de réglage fin par le biais d'une vis sans fin (13) et d'un écrou (15), **caractérisée en ce que** le mécanisme de réglage grossier (33) comprend une première transmission à courroie (24) au moyen de laquelle le mécanisme de réglage grossier (33) et l'optique de focalisation (7) sont en liaison coopérante par le biais de la vis sans fin (13) et de l'écrou (15), et **en ce qu'**il est prévu une deuxième transmission à courroie (26) pour la connexion du mécanisme de réglage fin (39) et de l'optique de focalisation par le biais des mêmes vis sans fin (13) et écrou (15).

2. Monoculaire, notamment lunette, comprenant une optique de focalisation (7) pouvant coulisser axialement le long de l'axe optique (2), selon la revendication 1.

3. Optique de focalisation selon la revendication 1 ou 2, **caractérisée en ce que** la première transmission à courroie est prévue pour la focalisation grossière et la deuxième transmission à courroie est prévue pour la focalisation fine.

4. Optique de focalisation selon la revendication 1 ou la revendication 2, **caractérisée en ce que** le mécanisme de réglage grossier (33) comprend un élément d'actionnement (35) qui est disposé à distance d'un élément d'actionnement (41) du mécanisme de réglage fin (39).

5. Optique de focalisation selon la revendication 1 ou la revendication 2, **caractérisée en ce que** l'élément d'actionnement (35) du mécanisme de réglage grossier (33) est connecté fixement à un arbre de sortie (37) qui est connecté fixement à une poulie de renvoi (29) de la première transmission à courroie (24).

6. Optique de focalisation selon la revendication 1 ou la revendication 2, **caractérisée en ce que** l'élément d'actionnement (41) du mécanisme de réglage fin est connecté fixement à un arbre de sortie (43) qui est connecté fixement à une poulie de renvoi (31) de la deuxième transmission à courroie (26).

7. Optique de focalisation selon la revendication 1 ou la revendication 2, **caractérisée en ce que** les transmissions à courroie (24, 26) sont disposées l'une à côté de l'autre à des extrémités tournées l'une vers l'autre des arbres de sortie (37, 43).

8. Optique de focalisation selon la revendication 1 ou la revendication 2, **caractérisée en ce que** l'élément d'actionnement (35) du mécanisme de réglage grossier (33) et l'élément d'actionnement (41) du mécanisme de réglage fin (39) sont disposés coaxialement à un axe médian commun (49).

9. Optique de focalisation selon la revendication 8, **caractérisée en ce que** les éléments d'actionnement (35, 41) sont disposés le long de l'axe médian (49) l'un derrière l'autre par rapport à l'axe optique (2) de l'optique de focalisation (7).

10. Optique de focalisation selon la revendication 1 ou la revendication 2, **caractérisée en ce que** les transmissions à courroie (24, 26) comprennent chacune une courroie dentée (25, 27) et les poulies de renvoi (17, 19, 29, 31) sont réalisées avec une denture externe (21) dans laquelle viennent en prise les dentures des courroies dentées (25, 27).

11. Commande de focalisation selon la revendication 1 ou la revendication 2, **caractérisée en ce que** les transmissions à courroie (24, 26) sont pourvues d'un galet-tendeur qui permet d'assurer une tension prédéterminée des courroies (25, 27) des transmissions à courroie (24, 26).

12. Commande de focalisation selon la revendication 1 ou la revendication 2, **caractérisée en ce que** le mécanisme de réglage fin (39) permet un positionnement trois fois plus exact par comparaison au mécanisme de réglage grossier (33).
